# FASCICULE DE BREVET EUROPEEN

(11) **EP 3 543 916 B1**
(45) Date de publication et mention de la délivrance du brevet: **16.07.2025**
(21) Numéro de dépôt: 19163345.2
(22) Date de dépôt: 18.03.2019
(51) Int. Cl.: G06N 3/0464, G06N 3/096, G06N 3/045

(54) **PROCÉDÉS D'APPRENTISSAGE DE PARAMÈTRES D'UN RÉSEAU DE NEURONES À CONVOLUTION, ET DE CLASSIFICATION D'UNE DONNÉE D'ENTRÉE**
LERNVERFAHREN VON PARAMETERN EINES NEURONALEN NETZES MIT KONVOLUTION, UND KLASSIFIZIERUNGSVERFAHREN EINER EINGANGSINFORMATION
METHODS FOR LEARNING OF PARAMETERS OF A CONVOLUTIONAL NEURAL NETWORK, AND CLASSIFICATION OF INPUT DATA

(30) Priorité: 20.03.2018 FR 1852351
(43) Date de publication de la demande: 25.09.2019
(73) Titulaire: IDEMIA Public Security France, 92400 Courbevoie (FR)
(72) Inventeur: CHABANNE, Hervé, 92400 Courbevoie (FR); DESPIEGEL, Vincent, 92400 Courbevoie (FR); MELLAKH, Anouar, 92400 Courbevoie (FR)
(74) Mandataire: IPS

(56) Documents cités:
- NICOLAS PAPERNOT ET AL: "Semi-supervised Knowledge Transfer for Deep Learning from Private Training Data", CORR (ARXIV), vol. 1610.05755v4, 3 March 2017 (2017-03-03), pages 1 - 16, XP055549005
- JASON YOSINSKI ET AL: "How transferable are features in deep neural networks?", 6 November 2014 (2014-11-06), pages 1 - 9, XP055277610, Retrieved from the Internet <URL:https://papers.nips.cc/paper/5347-how-transferable-are-features-in-deep-neural-networks.pdf> [retrieved on 20160603]
- MARTIN ABADI ET AL: "Deep Learning with Differential Privacy", COMPUTER AND COMMUNICATIONS SECURITY, ACM, 2 PENN PLAZA, SUITE 701 NEW YORK NY 10121-0701 USA, 24 October 2016 (2016-10-24), pages 308 - 318, XP058298927, ISBN: 978-1-4503-4139-4, DOI: 10.1145/2976749.2978318
- NICOLAS PAPERNOT ET AL: "Distillation as a Defense to Adversarial Perturbations Against Deep Neural Networks", 2016 IEEE SYMPOSIUM ON SECURITY AND PRIVACY (SP), 14 March 2016 (2016-03-14), pages 582 - 597, XP055540870, ISBN: 978-1-5090-0824-7, DOI: 10.1109/SP.2016.41
- JIHUN HAMM ET AL: "Learning Privately from Multiparty Data", CORR (ARXIV), vol. 1602.03552v1, 10 February 2016 (2016-02-10), pages 1 - 13, XP055550268
- GUO YIYOU ET AL: "Remote sensing image categorization with domain adaptation-based convolution neural network", 2017 10TH INTERNATIONAL CONGRESS ON IMAGE AND SIGNAL PROCESSING, BIOMEDICAL ENGINEERING AND INFORMATICS (CISP-BMEI), IEEE, 14 October 2017 (2017-10-14), pages 1 - 5, XP033326314, [retrieved on 20180222], DOI: 10.1109/CISP-BMEI.2017.8302032

## Description

### DOMAINE TECHNIQUE GENERAL

La présente invention concerne le domaine de l'apprentissage supervisé, et en particulier des procédés d'apprentissage de paramètres d'un réseau de neurones à convolution, ou de classification d'une donnée personnelle d'entrée de type image d'un visage au moyen d'un réseau de neurones à convolution.

### ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

On connait tout particulièrement une utilisation des CNN dans le domaine policier et antiterroriste. Plus précisément, des forces de polices disposent de bases de données de photographies par exemple de visages d'individus impliqués dans des affaires. Il est alors possible d'entraîner des CNN à reconnaitre des visages dans des données de vidéo-surveillance, en particulier pour détecter des individus recherchés. Similairement on peut imaginer que des gouvernements disposent de bases de données biométriques par exemple de empreintes digitales de passeports. Il est alors possible d'entraîner des CNN à reconnaitre les empreintes d'individus en particulier.

Aujourd'hui, une problématique qui se pose est que ces bases de données sont confidentielles, et restreintes (en particulier nationales). Or il serait souhaitable par exemple que les forces de police de plusieurs états coopèrent et améliorent l'efficacité globale de la reconnaissance, sans pour autant que l'on puisse remonter aux données confidentielles.

Cependant cela impliquerait dans tous les cas qu'une entité (par exemple les forces de police d'un état) fassent apprendre leurs CNN sur les bases de données d'une autre entité (les forces de police d'un autre état), i.e. se transmettent en clair les bases de données de photographies ou d'autres traits biométriques, ce qui n'est pas envisageable aujourd'hui.

Le problème d'apprentissage sur divers sets de données confidentielles a déjà été évoqué dans le document Nicolas Papernot, Martín Abadi, Úlfar Erlingsson, lan Goodfellow, Kunal Talwar: Semi-supervised Knowledge Transfer for Deep Learning from Private Training Data. ICLR 2017*.*

Il est proposé de faire apprendre des « professeurs » sur chacun des sets de données confidentiels, de sorte à pouvoir entrainer conjointement un « étudiant » qui in fine disposera de la connaissance des divers sets de données confidentielles.

Plus précisément, les professeurs vont générer une base de données d'apprentissage pour l'étudiant en classifiant des données publiques brutes grâce à un système de « vote » des professeurs, le cas échéant bruité pour éviter de pouvoir remonter aux sets individuels de données confidentielles ayant servi à l'apprentissage des professeurs.

Cette technique apporte satisfaction, mais reste limitée à une classification binaire ou du moins limitée à quelques possibilités déterminées (le document mentionne un exemple médical dans lequel on prédit si des patients ont le diabète ou pas), qui seront les mêmes quel que soit le set de données confidentielles d'entrée.

Ainsi, elle ne marche pas dans le cas de l'identification/authentification d'individus, à cause de la non-existence d'un espace commun de représentation. Plus précisément, les différentes bases de données confidentielles portent sur des personnes différentes : chaque professeur pourrait être entraîné, mais il serait impossible de les agréger puisque les individus d'autres bases de données leur sont mutuellement inconnus.

Une première idée serait de réduire le problème d'identification/authentification à la comparaison de paires ou de triplets. Par exemple, au lieu de demander au CNN s'il reconnait un visage donné dans une image de vidéo-surveillance, on lui demanderait s'il voit une concordance entre ce visage et une photographie par exemple d'identité d'un individu. Le CNN répond alors juste de façon binaire, et il est donc possible d'agréger un professeur sur cette base (puisque tous les professeurs sauront proposer une réponse à cette question).

On comprend d'une part qu'une telle situation devient rapidement ingérable si l'ensemble des bases de données regroupe des milliers de personnes (il faudrait faire toutes les comparaisons une à une). De plus on perd beaucoup en convergence par rapport à l'utilisation de fonctions de pertes (couches dites LOSS).

Il serait par conséquent souhaitable de disposer d'une nouvelle solution universelle d'apprentissage sur base de données confidentielles des paramètres d'un CNN pour classification de données au moyen du CNN.

### PRESENTATION DE L'INVENTION

Selon un premier aspect, la présente invention concerne un procédé d'apprentissage selon la revendication 1.

Des caractéristiques avantageuses et non limitatives de ce procédé sont définies dans les revendications 2 à 4.

Selon un deuxième aspect, la présente invention concerne un procédé de classification selon la revendication 5.

Selon un troisième et un quatrième aspect, l'invention propose un produit programme d'ordinateur selon la revendication 6 et un moyen de stockage lisible par un équipement informatique selon la revendication 7.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture pour la mise en œuvre des procédés selon l'invention
- la figure 2 représente schématiquement les étapes du procédé d'apprentissage selon l'invention

### DESCRIPTION DETAILLEE

### Architecture

Selon deux aspects complémentaires de l'invention, sont proposés :
- un procédé d'apprentissage de paramètres d'un réseau de neurones à convolution (CNN) pour classification de données ; et
- un procédé de classification d'une donnée d'entrée utilisant un CNN appris grâce au premier procédé.

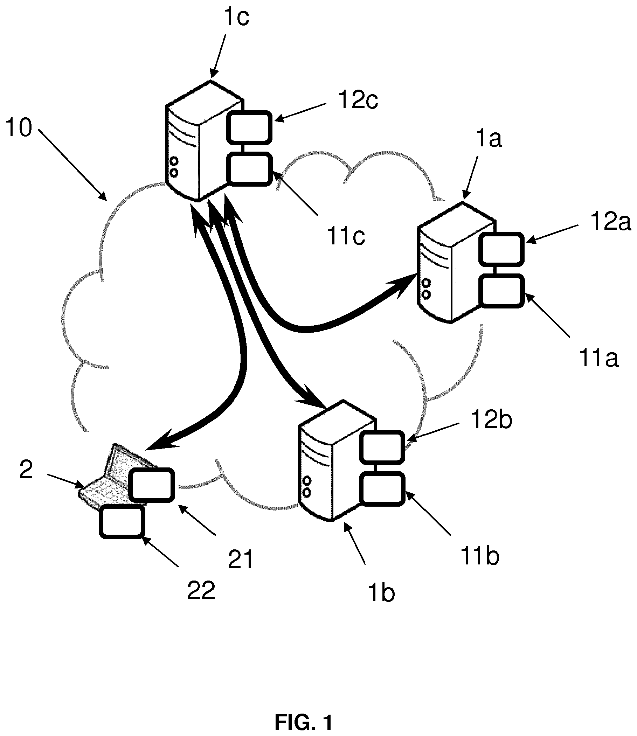

Ces deux types de procédés sont mis en œuvre au sein d'une architecture telle que représentée par la figure 1, grâce à au moins deux serveurs 1a, 1b, 1c et un terminal 2. Les serveurs 1a, 1b, 1c sont l'équipement d'apprentissage (mettant en œuvre du premier procédé) et le terminal 2 est un équipement de classification (mettant en œuvre le deuxième procédé), par exemple un équipement de traitement de données de vidéo-surveillance

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

On a au moins deux bases de données confidentielles d'apprentissage déjà classifiées, stockées sur deux serveurs distincts (1a et 1b dans la figure 1), sans interactions : le serveur 1a n'a pas accès à la base du serveur 1b et vice-versa.

Il s'agit par exemple de bases de données de forces de police nationales de deux états.

Lesdites données d'entrée ou d'apprentissage sont des données personnelles, i.e. personnelles d'un individu (pour lesquelles la confidentialité est donc nécessaire), et en particulier des données biométriques (qui sont par définition personnelles à leur possesseur) de type images de visages.

De manière générale, la classification d'une donnée personnelle est typiquement la reconnaissance de l'individu concerné, et à ce titre le présent procédé de classification d'une donnée personnelle d'entrée pourra être un procédé d'identification d'un individu au moyen d'une donnée personnelle dudit individu.

De façon générale, les données personnelles et en particulier biométriques sont des données « non quantifiables » (dans le sens où un visage ou une empreinte n'a pas de valeur numérique), pour lesquelles il n'existe pas d'espace commun de représentation.

Le serveur 1c est un serveur optionnel qui ne dispose quant à lui pas de base de données d'apprentissage (ou du moins pas de base de données confidentielle, mais on verra qu'il peut disposer d'au moins une première base de données publiques d'apprentissage). Le rôle de ce serveur 1c peut tout à fait être accompli par l'un ou l'autre des serveurs 1a, 1b, mais de façon préférée c'est un serveur distinct (i.e. cloisonné) pour éviter tout risque de divulgation des bases de données confidentielles des serveurs 1a, 1b.

### CNN

Un CNN contient généralement quatre types de couches traitant successivement l'information :
- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire NL est typiquement la fonction *ReLU* (Rectified Linear Unit, i.e. Unité de Rectification Linéaire) qui est égale à *f(x) = max(0, x)* et la couche de pooling (noté *POOL*) la plus utilisée est la fonction *MaxPool2*×*2* qui correspond à un maximum entre quatre valeurs d'un carré (on met en commun quatre valeurs en une seule).

La couche de convolution, notée *CONV,* et la couche entièrement connectée, notée FC, correspondent généralement à un produit scalaire entre les neurones de la couche précédente et les poids du CNN.

Les architectures typiques de CNN empilent quelques paires de couches *CONV* → *NL* puis ajoutent une couche *POOL* et répètent ce schéma *[(CONV* → *NL)^{p}* → *POOL]* jusqu'à obtenir un vecteur de sortie de taille suffisamment petite, puis terminent par deux couches entièrement connectées FC.

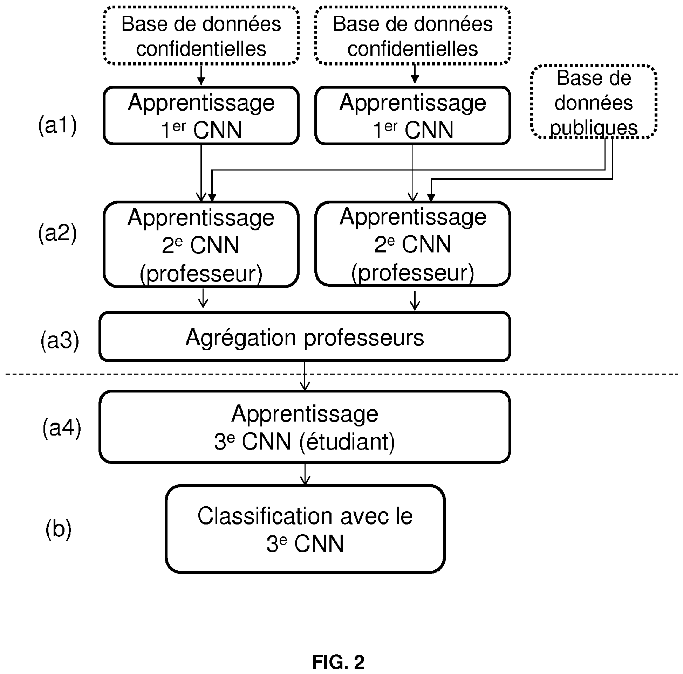

Voici une architecture CNN typique (dont un exemple est représenté par la **figure 2a**) :
*INPUT* → *[[CONV* → *NL]^{p}* → *POOL]ⁿ* → *FC* → *FC*

### Procédé d'apprentissage

Selon un premier aspect, est proposé en référence à la **figure 2** le procédé d'apprentissage, mis en œuvre par les moyens de traitement de données 11a, 11b d'au moins deux serveurs 1a, 1b, 1c.

Le procédé d'apprentissage commence par une partie « individuelle » correspondant au moins à une étape (a1) et une étape (a2), qui est faite indépendamment par chaque serveur 1a, 1b sur sa base de données confidentielle.

Dans l'étape (a1), à partir de ladite base de données confidentielles d'apprentissage déjà classifiées, le serveur 1a, 1b apprend de façon connue les paramètres d'un premier CNN. Puisqu'il y a plusieurs serveurs 1a, 1b disposant de bases indépendantes de données confidentielles d'apprentissage déjà classifiées, comme expliqué l'étape (a1) est mise en œuvre pour chacun de sorte à apprendre les paramètres d'une pluralité de premiers CNN, i.e. un pour chaque base de données confidentielles.

Tous les premiers CNN ont avantageusement la même architecture, et il s'agit de CNN d'extraction de « features » (i.e. caractéristiques, c'est-à-dire des traits différentiant) en particulier biométriques, et non forcément de CNN de classification. Plus précisément, les premiers CNN ne sont pas forcément capables de renvoyer un résultat de classification d'une donnée de la base de données confidentielle sur laquelle il a appris, mais au moins de produire une représentation des « features » de cette donnée dans un espace de représentation.

On comprend qu'à l'issue de l'étape (a1), chaque premier CNN a un espace de représentation qui lui est propre.

Dans une étape (a2), on va astucieusement transformer les premiers CNN en deuxièmes CNN qui eux possèdent un espace de représentation commun.

Pour arriver à cela, à partir d'une base cette fois publique de données d'apprentissage déjà classifiées (qu'on appellera première base de données publiques pour la distinguer d'une base de données publiques d'apprentissage cette fois encore non classifiées dont on parlera plus tard), le serveur 1a, 1b, 1c apprend des paramètres d'une couche entièrement connectée (FC) finale d'un deuxième CNN correspondant au premier CNN auquel on a rajouté ladite couche FC.

L'étape (a2) est mise en œuvre pour chacun des premiers CNN en utilisant la même première base de données publiques d'apprentissage déjà classifiées de sorte à apprendre les paramètres d'une pluralité de deuxièmes CNN, i.e. on obtient un deuxième CNN par base de données confidentielles, tous les deuxièmes CNN ayant avantageusement à nouveau la même architecture.

On comprend que les deuxièmes CNN correspondent aux premiers CNN complétés chacun d'une couche FC. Plus précisément, on donne aux premiers CNN une capacité de classification commune (dans ladite première base de données publiques) à partir de leur capacité d'extraction de features. On obtient ainsi un espace commun de représentation des classifications.

L'étape (a2) doit être comprise comme une étape d'apprentissage des seuls paramètres manquants des deuxièmes CNN, i.e. on garde les paramètres déjà appris pour les premiers CNN et on les « ré-entraine » de sorte à apprendre la couche FC, et ce sur les mêmes données, ce qui force l'apparition de l'espace commun.

L'homme du métier saura utiliser toute base de données publiques déjà classifiées pour la mise en œuvre de l'étape (a2), sachant que par « publiques » on entend que les données ne sont pas confidentielles et peuvent être partagées librement. La première base de données publique est différente de chacune des bases de données confidentielles. On peut soit constituer spécifiquement cette première base publique, soit utiliser une base disponible. Dans le cas où les données sont des photographies de visages, on citera par exemple la base de données IMDB (Internet Movie DataBase), de laquelle il est possible d'extraire des images de N=2622 individus, avec jusqu'à 1000 image par individu, voir Omkar M. Parkhi, Andrea Vedaldi, Andrew Zisserman: Deep Face Recognition. BMVC 2015*.*

L'étape (a2) pourra être mise en œuvre par chacun des serveurs 1a, 1b à condition qu'ils accèdent à ladite première base de données publique, ou alternativement c'est le serveur 1c qui peut s'en charger de manière centralisée.

A noter que la classification apprise peut, plutôt qu'une simple réponse binaire, graduer les réponses pour obtenir des nuances que l'on pourra exploiter en sachant aussi quelles sont les classes les plus proches, voir le document Geoffrey Hinton, Oriol Vinyals, Jeff Dean: Distilling the Knowledge in a Neural Network. NIPS 2014. Cela signifie simplement que là où une classification classique détermine LA classe qu'il estime être celle d'une donnée d'entrée (par exemple le nom de la personne en photo), la présente classification peut indiquer une ou plusieurs classes potentielles, éventuellement avec un pourcentage de confiance.

Dans des étapes (a3) et (a4), par exemple mise en œuvre par le serveur 1c commun, on procède avantageusement de façon similaire à ce qui est proposé dans le document Nicolas Papernot, Martín Abadi, Úlfar Erlingsson, lan Goodfellow, Kunal Talwar: Semi-supervised Knowledge Transfer for Deep Leaming from Private Training Data. ICLR 2017 évoqué au début.

Plus précisément, les deuxièmes CNN constituent des professeurs qui vont pouvoir entraîner un étudiant.

L'étape (a3) comprend ainsi la classification de données d'une deuxième base de données publiques encore non classifiées, au moyen des deuxièmes CNN de substitution, et l'étape (a4) comprend l'apprentissage, à partir de la deuxième base de données publiques d'apprentissage à présent classifiées, des paramètres d'un troisième CNN comprenant une couche FC finale. Le troisième CNN présente préférentiellement une architecture similaire à celle des deuxièmes CNN.

De façon connue, l'étape (a3) comprend pour chaque donnée de ladite deuxième base de données publique, la classification de cette donnée indépendamment par chacun des deuxième CNN, et l'agrégation des résultats de classification, i.e. le vote des professeurs. Comme expliqué, l'étape (a3) peut comprendre l'introduction de bruit sur les résultats de classification avant agrégation, de sorte à éviter de pouvoir remonter aux bases de données confidentielles des professeurs. L'homme du métier saura mettre en œuvre toute autre caractéristique de la technique d'apprentissage décrite dans document évoqué ci-avant.

On comprend que dans l'étape (a4), l'étudiant apprend en utilisant l'espace commun de représentation des classifications obtenu à l'étape (a2). En référence à la figure 2, la ligne horizontale en pointillés sépare les informations qui ne sont pas accessibles (les bases de données confidentielles, les premiers et deuxièmes CNN) de celles qui sont accessibles (la classification de la deuxième base de données publique, le troisième CNN).

Finalement, lorsque le troisième CNN, i.e. l'étudiant, est obtenu, sa dernière couche FC peut être supprimée pour revenir à un CNN d'extraction de features.

### Procédé de classification

Selon un deuxième aspect, est proposé le procédé de classification d'une donnée d'entrée, mis en œuvre par les moyens de traitement de données 21 du terminal 2.

Le procédé de classification comprend deux étapes : dans une première étape (a) est mis en œuvre l'apprentissage d'un troisième CNN tel que défini précédemment, et dans une deuxième étape (b) les moyens de traitement de données 21 du terminal 2 classifient ladite donnée d'entrée, au moyen du troisième CNN.

Ce procédé est mis en œuvre de façon classique, on comprend juste comme expliqué que connaissant seulement le troisième CNN, il n'y a pas possibilité de remonter aux bases de données confidentielles ayant permis l'apprentissage des premiers CNN.

### Produit programme d'ordinateur

Selon un troisième et un quatrième aspects, l'invention concerne un produit programme d'ordinateur comprenant des instructions de code pour l'exécution (en particulier sur les moyens de traitement de données 11a, 11b, 11c, 21 d'au moins deux serveurs 1a, 1b, 1c ou du terminal 2) d'un procédé selon le premier aspect de l'invention d'apprentissage de paramètres d'un CNN ou un procédé selon le deuxième aspect de l'invention de classification d'une donnée d'entrée, ainsi que des moyens de stockage lisibles par un équipement informatique (une mémoire 12a, 12b, 12c, 22 d'au moins deux serveurs 1a, 1b, 1c ou du terminal 2) sur lequel on trouve ce produit programme d'ordinateur.

## Revendications

1. Procédé d'apprentissage de paramètres d'un troisième réseau de neurones à convolution, CNN, pour classification de données personnelles, les données personnelles étant des images de visages, le procédé comprenant :
- une étape (a1) consistant, pour chacun d'un premier et d'un deuxième serveurs (1a, 1b) chacun disposant d'une base indépendante de données confidentielles d'apprentissage déjà classifiées, à réaliser l'apprentissage, à partir de sa base indépendante de données confidentielles d'apprentissage déjà classifiées, des paramètres d'un premier CNN d'une pluralité de premiers CNN d'extraction de caractéristiques de données personnelles, chaque premier CNN correspondant à l'une des bases indépendantes de données confidentielles d'apprentissage déjà classifiées ;
- une étape (a2) consistant, pour chaque serveur des premier et deuxième serveurs (1a, 1b) ou pour un troisième serveur (1c), à réaliser l'apprentissage, à partir d'une base de données publiques d'apprentissage déjà classifiées, des paramètres d'une couche entièrement connectée, FC, finale d'une pluralité de deuxièmes CNN correspondant chacun à l'un de la pluralité de premiers CNN auquel on a rajouté ladite couche entièrement connectée FC, les paramètres des premiers CNN étant gardés, l'étape (a2) étant mise en oeuvre en utilisant la même base de données publiques d'apprentissage déjà classifiées de sorte à apprendre les paramètres de la pluralité de deuxièmes CNN ;
- la mise en oeuvre, par l'un des premier, deuxième et troisième serveurs (1a, 1b, 1c) d'étapes de :
(a3) Classification, indépendamment par chaque deuxième CNN de la pluralité de deuxièmes CNN appris à l'issue de l'étape (a2), de données d'une deuxième base de données publiques encore non classifiées et d'agrégation des résultats de la classification ;
(a4) Apprentissage, à partir de la deuxième base de données publiques d'apprentissage à présent classifiées, des paramètres du troisième CNN comprenant une couche entière connectée, FC, finale.

2. Procédé selon la revendication 1, dans lequel l'étape (a3) comprend l'introduction de bruit sur les résultats de classification avant agrégation.

3. Procédé selon l'une des revendications 1 et 2, dans lequel le troisième CNN présente la même architecture que les deuxièmes CNN.

4. Procédé selon l'une des revendications 1 à 3, dans lequel l'étape (a4) comprend la suppression de ladite couche entièrement connectée, FC, finale du troisième CNN.

5. Procédé de classification d'une donnée d'entrée, la donnée d'entrée étant une image de visage, **caractérisé en ce qu'**il comprend la mise en œuvre d'étapes de :
(a) Apprentissage d'un troisième CNN conformément au procédé selon l'une des revendications 1 à 4 ;
(b) Classification par des moyens de traitement de données (21) d'un terminal (2) de ladite donnée d'entrée, au moyen du troisième CNN.

6. Produit programme d'ordinateur comprenant des instructions de code qui, lorsqu'elles sont exécutées par l'ordinateur, conduisent celui-ci à mettre en œuvre un procédé selon l'une des revendications 1 à 5 d'apprentissage de paramètres d'un troisième réseau de neurones à convolution, CNN, ou de classification d'une donnée d'entrée.

7. Moyen de stockage lisible par un équipement informatique sur lequel un produit programme d'ordinateur comprend des instructions de code qui, lorsqu'elles sont exécutées par l'ordinateur, conduisent celui-ci à mettre en œuvre un procédé selon l'une des revendications 1 à 5 d'apprentissage de paramètres d'un troisième réseau de neurones à convolution, CNN, ou de classification d'une donnée d'entrée.

## Patentansprüche

1. Verfahren zum Lernen von Parametern eines dritten gefalteten neuronalen Netzes, CNN, zur Klassifizierung von persönlichen Daten, wobei die persönlichen Daten Bilder von Gesichtern sind, wobei das Verfahren umfasst:
- einen Schritt (a1), der darin besteht, für jeden von einem ersten und einem zweiten Server (1a, 1b), die jeweils über eine unabhängige Datenbank von bereits klassifizierten vertraulichen Lerndaten verfügen, anhand seiner unabhängigen Datenbank von bereits klassifizierten vertraulichen Lerndaten das Lernen der Parameter eines ersten CNN von mehreren ersten CNN der Extraktion von Merkmalen von persönlichen Daten durchzuführen, wobei jedes erste CNN einer der unabhängigen Datenbanken von bereits klassifizierten vertraulichen Lerndaten entspricht;
- einen Schritt (a2), der darin besteht, für jeden Server von dem ersten und zweiten Server (1a, 1b) oder für einen dritten Server (1c) das Lernen, anhand einer Datenbank von bereits klassifizierten öffentlichen Lerndaten, der Parameter einer finalen vollständig verbundenen Schicht, FC, mehrerer zweiter CNN durchzuführen, die jeweils einem der mehreren ersten CNN entsprechen, dem die vollständig verbundene Schicht FC hinzugefügt wurde, wobei die Parameter der ersten CNN beibehalten werden, wobei der Schritt (a2) unter Verwendung derselben Datenbank von bereits klassifizierten öffentlichen Lerndaten durchgeführt wird, um so die Parameter der mehreren zweiten CNN zu lernen;
- die Durchführung, durch einen von dem ersten, zweiten und dritten Server (1a, 1b, 1c), von Schritten:
(a3) der Klassifizierung, unabhängig durch jedes zweite CNN der mehreren zweiten CNN, die im Ergebnis von Schritt (a2) gelernt wurden, von Daten einer zweiten Datenbank von noch nicht klassifizierten öffentlichen Daten und der Aggregation der Ergebnisse der Klassifizierung;
(a4) des Lernens, anhand der zweiten Datenbank von gegenwärtig klassifizierten öffentlichen Lerndaten, der Parameter des dritten CNN, das eine finale vollständig verbundene Schicht, FC, umfasst.

2. Verfahren nach Anspruch 1, wobei der Schritt (a3) die Einführung von Rauschen in die Klassifizierungsergebnisse vor der Aggregation umfasst.

3. Verfahren nach einem der Ansprüche 1 und 2, wobei das dritte CNN dieselbe Architektur wie die zweiten CNN aufweist.

4. Verfahren nach einem der Ansprüche 1 bis 3, wobei der Schritt (a4) das Weglassen der finalen vollständig verbundenen Schicht, FC, des dritten CNN umfasst.

5. Verfahren zur Klassifizierung eines Eingangsdatenelements, wobei das Eingangsdatenelement ein Gesichtsbild ist, **dadurch gekennzeichnet, dass** es die Durchführung von Schritten umfasst:
(a) des Lernens eines dritten CNN gemäß dem Verfahren nach einem der Ansprüche 1 bis 4,
(b) der Klassifizierung, durch Datenverarbeitungsmittel (21) eines Endgerätes (2), des Eingangsdatenelements mittels des dritten CNN.

6. Computerprogrammprodukt, welches Codeanweisungen umfasst, die, wenn sie von dem Computer ausgeführt werden, bewirken, dass dieser ein Verfahren nach einem der Ansprüche 1 bis 5 zum Lernen von Parametern eines dritten gefalteten neuronalen Netzes, CNN, oder zur Klassifizierung eines Eingangsdatenelements durchführt.

7. Von einer Datenverarbeitungsanlage lesbares Speichermittel, auf dem ein Computerprogrammprodukt Codeanweisungen umfasst, die, wenn sie von dem Computer ausgeführt werden, bewirken, dass dieser ein Verfahren nach einem der Ansprüche 1 bis 5 zum Lernen von Parametern eines dritten gefalteten neuronalen Netzes, CNN, oder zur Klassifizierung eines Eingangsdatenelements durchführt.

## Claims

1. Method for learning parameters of a third convolutional neural network, CNN, for classifying personal data, the personal data being images of faces, the method comprising:
- a step (a1) consisting, for each of a first and a second server (1a, 1b) each having an independent database of already classified confidential training data, to learn, on the basis of its independent database of already classified confidential training data, the parameters of a first CNN of a plurality of first CNNs for extracting features from personal data, each first CNN corresponding to one of the independent databases of already classified confidential training data;
- a step (a2) consisting, for each server of the first and second servers (1a, 1b) or for a third server (1c), in learning, on the basis of a database of already classified public training data, the parameters of a final fully connected layer, FC, of a plurality of second CNNs each corresponding to one of the plurality of first CNNs to which said fully connected layer FC has been added, the parameters of the first CNNs being kept, the step (a2) being implemented using the same database of already classified public training data so as to learn the parameters of the plurality of second CNNs;
- one of the first, second and third servers (1a, 1b, 1c) implementing steps of:
(a3) each second CNN of the plurality of second CNNs trained at the end of the step (a2) independently classifying data of a second database of not yet classified public data, and aggregating the results of the classification;
(a4) learning, on the basis of the second database of at present classified public training data, the parameters of the third CNN comprising a final fully connected layer, FC.

2. Method according to Claim 1, wherein the step (a3) comprises introducing noise into the classification results before aggregation.

3. Method according to one of Claims 1 and 2, wherein the third CNN has the same architecture as the second CNNs.

4. Method according to one of Claims 1 to 3, wherein the step (a4) comprises deleting said final fully connected layer, FC, of the third CNN.

5. Method for classifying an input datum, the input datum being an image of a face, **characterized in that** it comprises implementing steps of:
(a) training a third CNN in accordance with the method according to one of Claims 1 to 4;
(b) data processing means (21) of a terminal (2) classifying said input datum, by means of the third CNN.

6. Computer program product comprising code instructions which, when they are executed by the computer, lead it to implement a method according to one of Claims 1 to 5 for learning parameters of a third convolutional neural network, CNN, or for classifying an input datum.

7. Storage medium which can be read by a computer device on which a computer program product comprises code instructions which, when they are executed by the computer, lead it to implement a method according to one of Claims 1 to 5 for learning parameters of a third convolutional neural network, CNN, or for classifying an input datum.
